# EUROPÄISCHE PATENTSCHRIFT

(11) **EP 4 223 991 B1**
(45) Veröffentlichungstag und Bekanntmachung des Hinweises auf die Patenterteilung: **21.05.2025**
(21) Anmeldenummer: 23150031.5
(22) Anmeldetag: 02.01.2023
(51) Int. Cl.: F01N 3/027, F01N 3/20, F01N 13/18

(54) **ELEKTRISCHER ABGASHEIZER**
ELECTRIC EXHAUST GAS HEATER
DISPOSITIF DE CHAUFFAGE ÉLECTRIQUE DE GAZ D'ÉCHAPPEMENT

(30) Priorität: 02.02.2022 DE 102022102376
(43) Veröffentlichungstag der Anmeldung: 09.08.2023
(73) Patentinhaber: Purem GmbH, 66539 Neunkirchen (DE)
(72) Erfinder: Uysal, Fatih, Plochingen (DE); Höckel, Sandra, Esslingen am Neckar (DE)
(74) Vertreter: Ruttensperger Lachnit Trossin Gomoll

(56) Entgegenhaltungen:
- EP-A1- 4 060 169
- EP-A1- 4 141 229
- WO-A1-2013/104754
- DE-U1- 202021 100 999

## Beschreibung

Die vorliegende Erfindung betrifft einen Abgasheizer für eine Abgasanlage einer Brennkraftmaschine, umfassend eine von Abgas im Wesentlichen in Richtung einer Abgasheizer-Längsachse durchströmbare Trägeranordnung und wenigstens einen an der Trägeranordnung getragenen Heizleiter.

Ein derartiger Abgasheizer wird im Allgemeinen dazu eingesetzt, eine Abgasanlage durchströmendes Abgas einer Brennkraftmaschine oder ein anderes durch eine Abgasanlage geleitetes Gas zu erwärmen, um die auf das Abgas bzw. Gas übertragene Wärme in einem Bereich der Abgasanlage stromabwärts bezüglich des Abgasheizers auf andere Systembereiche, beispielsweise eine Abgasbehandlungseinheit wie zum Beispiel Katalysator oder Partikelfilter, zu übertragen, um insbesondere in einer Startphase des Verbrennungsbetriebs oder vor Beginn des Verbrennungsbetriebs einer Brennkraftmaschine derartige Systembereiche möglichst schnell auf Betriebstemperatur zu bringen.

Aus der deutschen Patentanmeldung DE 10 2020 123 376 ist ein Abgasheizer bekannt, bei welchem ein Heizleiter mit einer Mehrzahl von Heizleiter-Mäanderfeldern ausgebildet ist. In jedem Heizleiter-Mäanderfeld verlaufen radial zueinander gestaffelt angeordnete Mäanderabschnitte im Wesentlichen in Umfangsrichtung. Der Heizleiter ist als ein Materialstück durch Heraustrennen aus einem Metall-Flachmaterial bereitgestellt, wodurch es möglich wird, den Heizleiter hinsichtlich der Formgebung der einzelnen Heizleiter-Mäanderfelder bzw. der Mäanderabschnitte in den einzelnen Heizleiter-Mäanderfeldern mit großer Freiheit bereitzustellen.

Ein Abgasheizer gemäß dem Oberbegriff des Anspruchs 1 ist aus der DE 20 2021 100 999 U1 bekannt. Dieser Abgasheizer umfasst einen in einem rohrartigen Gehäuse angeordneten Heizleiter, der durch Biegen eines Heizbandes mit einem Heizleiter-Mäanderfeld ausgebildet ist. Das Heizleiter-Mäanderfeld weist eine Mehrzahl zueinander paralleler Mäanderabschnitte auf, welche alternierend in Mäanderabschnitt-Endbereichen durch Mäanderabschnitt-Verbindungsabschnitte verbunden sind.

Es ist die Aufgabe der vorliegenden Erfindung, einen Abgasheizer für eine Abgasanlage einer Brennkraftmaschine bereitzustellen, mit welchem eine erhöhte Heizeffizienz erreicht werden kann.

Erfindungsgemäß wird diese Aufgabe gelöst durch einen Abgasheizer für eine Abgasanlage einer Brennkraftmaschine gemäß Anspruch 1, umfassend eine von Abgas im Wesentlichen in Richtung einer Abgasheizer-Längsachse durchströmbare Trägeranordnung und wenigstens einen an der Trägeranordnung getragenen Heizleiter

Der wenigstens eine Heizleiter ist mit zum Bereitstellen eines wenigstens bereichsweise mäanderartigen Heizleiterverlaufs gebogenem Flachmaterial mit einander gegenüberliegenden Heizleiter-Flachseiten und einander gegenüberliegenden Heizleiter-Breitseiten aufgebaut.

Bei dem erfindungsgemäßen Aufbau eines Abgasheizers ist der Heizleiter nicht durch Heraustrennen, also beispielsweise Ausstanzen oder Herausschneiden aus einem Metall-Flachmaterial mit definierter Formgebung bereitgestellt, sondern dadurch, dass ein beispielsweise bandartiges Flachmaterial in die für den Heizleiter vorgesehene Form gebogen wird. Dadurch wird es möglich, den Heizleiter mit einer insbesondere quer zur Abgasströmungsrichtung sehr dünnen, in der Abgasströmungsrichtung jedoch vergleichsweise weit ausgedehnten Struktur bereitzustellen, wodurch einerseits der Strömungswiderstand im Abgasheizer gemindert wird, andererseits eine vergleichsweise große zur Wärmeübertragung nutzbare Fläche bereitgestellt werden kann.

Dies kann insbesondere dann erreicht werden, wenn der wenigstens eine Heizleiter mit seinen Heizleiter-Breitseiten sich im Wesentlichen in Richtung der Abgasheizer-Längsachse erstreckend angeordnet ist und mit seinen Heizleiter-Flachseiten sich im Wesentlichen orthogonal zur Abgasheizer-Längsachse erstreckend angeordnet ist.

Bei der vorliegenden Erfindung umfasst der wenigstens eine Heizleiter wenigstens ein Heizleiter-Mäanderfeld mit einer Mehrzahl von in Richtung einer Mäanderabschnitt-Längsrichtung langgestreckten, zueinander im Wesentlichen parallelen Mäanderabschnitten, wobei quer zur Mäanderabschnitt-Längsrichtung einander unmittelbar benachbarte Mäanderabschnitte in jeweils einem ihrer Mäanderabschnitt-Endbereiche durch einen Mäanderabschnitt-Verbindungsabschnitt miteinander verbunden sind. Mit einer derartigen Anordnung wird eine sehr dichte Packung der einzelnen Mäanderabschnitte und somit eine bezogen auf den von Abgas durchströmbaren Gesamtquerschnitt große Oberfläche zur Wärmeübertragung erreicht.

Eine weitere Zunahme der zur Wärmeübertragung zur Verfügung stehenden Oberfläche wird dadurch erreicht, dass wenigstens ein, vorzugsweise im Wesentlichen jeder Mäanderabschnitt zwischen seinen Mäanderabschnitt-Endbereichen wenigstens bereichsweise wellenartig mit einer Mehrzahl von in der Mäanderabschnitt-Längsrichtung aufeinander folgenden Wellenscheiteln ausgebildet ist.

Insbesondere dann, wenn der Heizleiter durch in die gewünschte Form gebogenes Flachmaterial bereitgestellt wird, ist es für eine möglichst einfache Herstellung vorteilhaft, wenn der wenigstens eine Heizleiter wenigstens zwei Heizleiter-Mäanderfelder umfasst, wobei ein erstes Heizleiter-Mäanderfeld der wenigstens zwei Heizleiter-Mäanderfelder einen ersten Anschlussbereich zum Anschließen des wenigstens einen Heizleiters an eine Spannungsquelle bereitstellt und ein zweites Heizleiter-Mäanderfeld der wenigstens zwei Heizleiter-Mäanderfelder einen zweiten Anschlussbereich zum Anschließen des wenigstens einen Heizleiters an die Spannungsquelle bereitstellt.

Dabei kann wenigstens ein Heizleiter-Mäanderfeld durch ein einziges Heizleiter-Materialstück bereitgestellt sein. Dies bedeutet, dass ein derartiges Heizleiter-Mäanderfeld bereitgestellt werden kann, ohne verschiedene bzw. separat ausgebildete Materialstücke mechanisch bzw. elektrisch leitend miteinander verbinden zu müssen. Dabei ist es besonders vorteilhaft, wenn alle Heizleiter-Mäanderfelder durch ein einziges Heizleiter-Materialstück bereitgestellt sind, so dass zum Bereitstellen des gesamten Heizleiters keine Verbindungsvorgänge zum Zusammenfügen separater Materialstücke erforderlich sind.

Insbesondere bei größerer Dimensionierung eines Abgasheizers bzw. vergleichsweise komplexem Verlauf des Heizleiters kann es für eine einfache Herstellung vorteilhaft sein, wenn wenigstens zwei Heizleiter-Mäanderfelder durch separate Heizleiter-Materialstücke bereitgestellt sind.

Dabei kann der Aufbau durch Verwendung von Gleichteilen vereinfacht werden, wenn wenigstens zwei, vorzugsweise alle durch separate Heizleiter-Materialstücke bereitgestellte Heizleiter-Mäanderfelder zueinander im Wesentlichen formgleich ausgebildet sind.

Um im Heizbetrieb eine möglichst gleichmäßige Durchströmung des Abgasheizers in seinen gesamten Querschnitt zu erreichen, wird vorgeschlagen, dass wenigstens zwei durch separate Heizleiter-Materialstücke bereitgestellte Heizleiter-Mäanderfelder bezüglich einer die Heizleiter-Längsachse enthaltenden Symmetrieebene zueinander im Wesentlichen spiegelsymmetrisch ausgebildet sind.

Wenn der Heizleiter mit zwei durch separate Heizleiter-Materialstücke bereitgestellten Heizleiter-Mäanderfeldern ausgebildet ist, können dabei die beiden Heizleiter-Mäanderfelder bezüglich einer die Heizleiter-Längsachse enthaltenden Symmetrieebene zueinander im Wesentlichen spiegelsymmetrisch angeordnet sein. Ist der Heizleiter beispielsweise mit vier durch separate Heizleiter-Materialstücke bereitgestellten Heizleiter-Mäanderfeldern ausgebildet, können die vier Heizleiter-Mäanderfelder bezüglich zwei die Heizleiter-Längsachse enthaltenden und zueinander orthogonalen Symmetrieebenen jeweils paarweise zueinander im Wesentlichen spiegelsymmetrisch angeordnet sein.

Gemäß einem weiteren Aspekt der vorliegenden Erfindung, welcher eigenständig, insbesondere aber auch in Verbindung mit den vorangehend diskutierten Ausgestaltungsaspekten zu einem besonders vorteilhaften Aufbau eines Abgasheizers beiträgt, kann die Trägeranordnung ein Trägergehäuse mit einem an einer ersten axialen Seite des wenigstens einen Heizleiters angeordneten, im Wesentlichen quer zur Abgasheizer-Längsachse sich erstreckenden Gehäuseboden umfassen, wobei in dem Gehäuseboden eine Mehrzahl von Abgasdurchströmöffnungen vorgesehen ist, und wobei der wenigstens eine Heizleiter durch eine Mehrzahl von Trägerelementen an dem Gehäuseboden getragen ist.

Um einerseits eine stabile Halterung des Heizleiters an der Trägeranordnung zu gewährleisten, andererseits den dadurch eingeführten Strömungswiderstand möglichst gering zu halten, wird vorgeschlagen, dass wenigstens ein, vorzugsweise jedes Trägerelement einen an dem Gehäuseboden festgelegten Trägerstift sowie eine unter Zwischenlagerung von elektrisch isolierendem Material, vorzugsweise Magnesiumoxid-Material, an dem Trägerstift getragene und an dem wenigstens einen Heizleiter festgelegte Trägerhülse umfasst, oder/und dass wenigstens ein, vorzugsweise jedes Trägerelement mit einer Trägerelement-Längsachse im Wesentlichen parallel zur Abgasheizer-Längsachse angeordnet ist.

Für eine einfach zu realisierende, gleichwohl mechanisch stabile und insbesondere auch abgasresistente und temperaturbeständige Ausgestaltung können das Trägergehäuse sowie der Trägerstift und die Trägerhülse des wenigstens einen, vorzugsweise jedes Trägerelements mit Metallmaterial aufgebaut sein. Der Trägerstift des wenigstens einen, vorzugsweise jedes Trägerelements kann mit dem Gehäuseboden durch Materialschluss, vorzugsweise Verschweißen oder Verlöten, verbunden sein. Weiter kann die Trägerhülse des wenigstens einen, vorzugsweise jedes Trägerelements mit dem wenigstens einen Heizleiter durch Materialschluss, vorzugsweise Verschweißen oder Verlöten, verbunden sein.

Insbesondere dann, wenn der Heizleiter mit mehreren voneinander separat bereitgestellten Materialstücken aufgebaut ist, ist es für einen stabilen Aufbau und zum Erreichen einer elektrisch leitenden Verbindung aller Materialstücke miteinander vorteilhaft, wenn wenigstens zwei als separate Heizleiter-Materialstücke bereitgestellte Heizleiter-Mäanderfelder vermittels wenigstens eines diese an dem Trägergehäuse tragenden Trägerelements elektrisch leitend miteinander verbunden sind.

Um beispielsweise das Trägergehäuse an eine rohrartige oder gehäuseartige Abgasführungskomponente einer Abgasanlage anbinden zu können, kann dieses eine radial außen an den Gehäuseboden anschließende Umfangswand aufweisen.

Das Trägergehäuse kann mit dem Gehäuseboden und der Umfangswand topfartig ausgebildet sein. Um einerseits eine definierte Strömungsführung zu erreichen, andererseits den Strömungswiderstand möglichst gering zu halten und gleichwohl eine große Wärmeübertragungsfläche bereitstellen zu können, wird weiter vorgeschlagen, dass der wenigstens eine Heizleiter an einer zweiten axialen Seite im Wesentlichen nicht von der Trägeranordnung überdeckt ist oder/und der wenigstens eine Heizleiter an der zweiten axialen Seite axial über die Umfangswand hervorsteht.

Die Erfindung betrifft ferner eine Abgasanlage für eine Brennkraftmaschine, umfassend wenigstens eine Abgasbehandlungseinheit, vorzugsweise Katalysator oder/und Partikelfilter, und wenigstens einen erfindungsgemäß aufgebauten Abgasheizer in einer Abgas-Hauptströmungsrichtung stromaufwärts bezüglich der wenigstens einen Abgasbehandlungseinheit.

Die vorliegende Erfindung wird nachfolgend mit Bezug auf die beiliegenden Figuren detailliert beschrieben. Es zeigt:
- Fig. 1: eine perspektivische Ansicht eines Abgasheizers betrachtet an einer beispielsweise in Richtung stromaufwärts bezüglich einer Abgas-Hauptströmungsrichtung orientierten ersten axialen Seite;
- Fig. 2: eine perspektivische Ansicht des in Fig. 1 dargestellten Abgasheizers, betrachtet an einer beispielsweise in Richtung stromabwärts bezüglich der Abgas-Hauptströmungsrichtung orientierten zweiten axialen Seite;
- Fig. 3: eine Axialansicht des Abgasheizers der Fig. 1 und 2, betrachtet an der zweiten axialen Seite;
- Fig. 4: eine Detailansicht des Abgasheizers der Fig. 1 und 2;
- Fig. 5: eine weitere Detailansicht des Abgasheizers der Fig. 1 und 2;
- Fig. 6: eine der Fig. 2 entsprechende Ansicht eines Abgasheizers einer alternativen Ausgestaltungsform;
- Fig. 7: einen mit zwei als separate Materialstücke ausgebildeten Heizleiter-Mäanderfeldern ausgebildeten Heizleiter des Abgasheizers der Fig. 6;
- Fig. 8: eine der Fig. 7 entsprechende Ansicht eines weiteren alternativ ausgestalteten Heizleiters mit vier als separate Materialstücke bereitgestellten Heizleiter-Mäanderfeldern;
- Fig. 9: eine der Fig. 1 entsprechende Ansicht einer alternativen Ausgestaltungsart eines Abgasheizers;
- Fig. 10: eine Seitenansicht des Abgasheizers der Fig. 9;
- Fig. 11: eine prinzipartige Darstellung einer einen Abgasheizer und eine Abgasbehandlungseinheit enthaltenden Abgasanlage für eine Brennkraftmaschine.

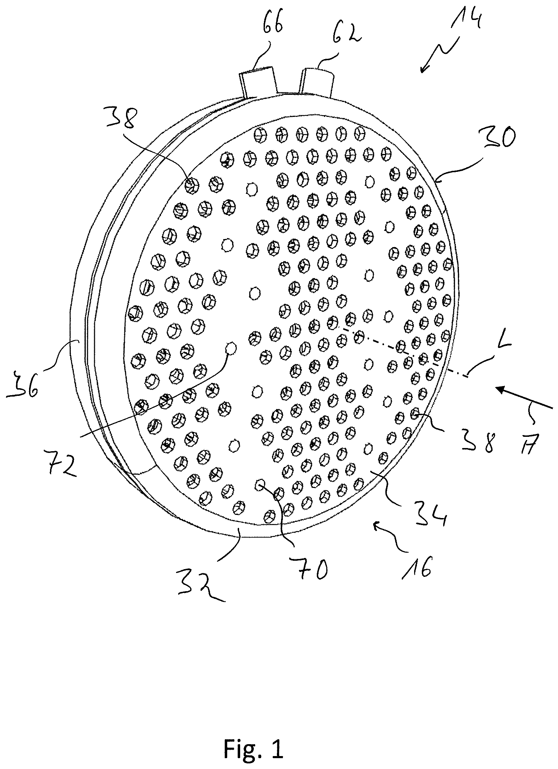

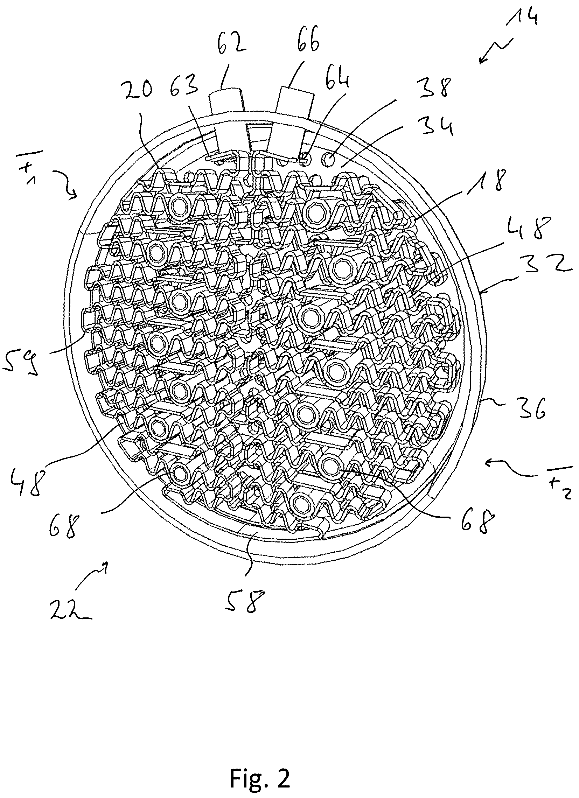

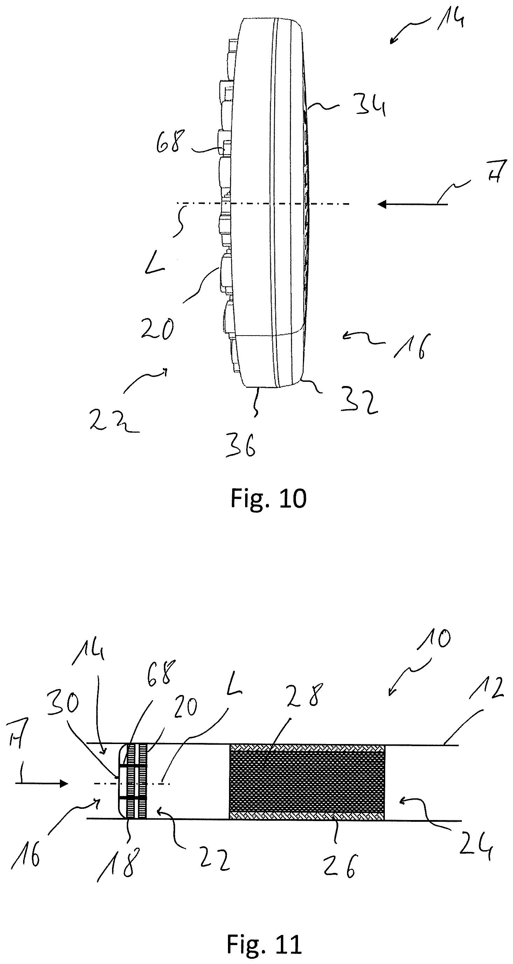

Bevor nachfolgend mit Bezug auf die Fig. 1 bis 10 verschiedene Ausgestaltungsformen eines in einer Abgasanlage einer Brennkraftmaschine einsetzbaren Abgasheizers beschrieben werden, wird mit Bezug auf die Fig. 11 dargelegt, wie ein derartiger Abgasheizer in eine Abgasanlage einer Brennkraftmaschine beispielsweise in einem Fahrzeug integriert ist.

Die Fig. 11 zeigt in prinzipartiger Darstellung eine derartige Abgasanlage 10 mit einer rohrartigen oder gehäuseartigen und ggf. aus mehreren Teilen zusammengesetzten Abgasführungskomponente 12. In einem stromaufwärtigen Bereich dieser Abgasführungskomponente 12 ist eine allgemein mit 14 bezeichneter Abgasheizer derart angeordnet, dass dieser an einer ersten axialen Seite 16 von in einer Abgas-Hauptströmungsrichtung A in der Abgasführungskomponente 12 auf den Abgasheizer 14 zu strömendem Abgas angeströmt wird. Der Abgasheizer 14 wird von dem Abgas durchströmt, welches beim Durchströmen des Abgasheizers 14 Wärme von zwei in Richtung einer Abgasheizer-Längsachse L aufeinander folgend angeordneten Heizleitern 18, 20 aufnimmt. Nach dem Durchströmen des Abgasheizers 14 bzw. der in der Abgas-Hauptströmungsrichtung A bzw. in Richtung der Abgasheizer-Längsachse L aufeinander folgend angeordneten Heizleiter 18, 20 verlässt der erwärmte Abgasstrom den Abgasheizer 14 an einer zweiten axialen Seite 22 und strömt auf eine stromabwärts des Abgasheizers 14 angeordnete Abgasbehandlungseinheit 24 zu. Diese kann beispielsweise als Katalysator ausgebildet sein und einen beispielsweise vermittels eines faserartigen Lagermaterials 26 in der Abgasführungskomponente 12 getragenen Katalysatorblock 28 umfassen.

Das im Abgasheizer 14 erwärmte Abgas oder ein sonstiges in die Abgasführungskomponente 12 eingeleitetes und den Abgasheizer 14 durchströmendes Gas überträgt Wärme auf die Abgasbehandlungseinheit 24, so dass diese insbesondere vor oder bei Inbetriebnahme einer Brennkraftmaschine schnell auf die zur Durchführung der katalytischen Reaktion erforderliche Temperatur gebracht wird und die Zeitdauer, in welcher Abgas im Wesentlichen ohne Reinigungseffekt ausgestoßen wird, deutlich verkürzt werden kann.

Eine erste Ausgestaltungsforme eines derartigen Abgasheizers 14 wird nachfolgend mit Bezug auf die Fig. 1 bis 5 detailliert erläutert.

Der Abgasheizer 14 umfasst eine allgemein mit 30 bezeichnete Trägeranordnung, an welcher im dargestellten Ausgestaltungsbeispiel die beiden in Richtung der Abgasheizer-Längsachse L aufeinander folgend angeordneten Heizleiter 18, 20 getragen sind. Die Trägeranordnung 30 umfasst ein beispielsweise als Blechumformteil bereitgestelltes Trägergehäuse 32 mit einem zur Abgasheizer-Längsachse L im Wesentlichen quer, also im Wesentlichen orthogonal angeordneten Gehäuseboden 34 und einer radial außen an den Gehäuseboden 34 anschließenden Umfangswand 36. Das Trägergehäuse 32 weist somit eine im Wesentlichen topfartige Struktur auf und überdeckt mit seinem Gehäuseboden 34 die beiden Heizleiter 18, 20 im Wesentlichen nur an der ersten axialen Seite 16. An der zweiten axialen Seite 22 ist das Trägergehäuse 32 grundsätzlich offen und überdeckt die beiden Heizleiter 18, 20 vorzugsweise in keinem ihrer radialen Bereiche.

Um zu ermöglichen, dass das Abgas die Heizleiter 18, 20 umströmt, sind im Gehäuseboden 34 mehrere im Wesentlichen gleichmäßig verteilte Abgasdurchströmöffnungen 38 ausgebildet. Wird der Abgasheizer 14, so wie dies auch in Fig. 11 angedeutet ist, derart in der Abgasanlage 10 bzw. der Abgasführungskomponente 12 derselben positioniert, dass der Gehäuseboden 34 bzw. die erste axiale Seite 16 in Richtung stromaufwärts orientiert ist und somit das Abgas in der Abgas-Hauptströmungsrichtung A auf den Gehäuseboden 34 des Trägergehäuses 32 zu strömt, tritt das Abgas im Bereich der Abgasdurchströmöffnungen 38 in den Innenraum des Trägergehäuses 32 ein, in welchem die beiden Heizleiter 18, 20 positioniert sind. Das Abgas umströmt die Heizleiter 18, 20 im Wesentlichen in einer der Abgas-Hauptströmungsrichtung A bzw. der Abgasheizer-Längsachse L entsprechenden Richtung und verlässt nach thermischer Wechselwirkung mit den Heizleitern 18, 20 das Trägergehäuse 32 an der grundsätzlich offenen zweiten axialen Seite 22.

Es ist darauf hinzuweisen, dass grundsätzlich der Abgasheizer 14 auch in anderer Orientierung in die Abgasanlage 10 integriert werden könnte, so dass das in der Abgas-Hauptströmungsrichtung A auf diesen zu strömende Abgas an der zweiten axialen Seite 22 in das Trägergehäuse 32 eintritt und nach dem Umströmen der Heizleiter 18, 20 im Bereich der Abgasdurchströmöffnungen 38 an der ersten axialen Seite 16 aus dem Trägergehäuse 32 austritt.

Der grundsätzliche Aufbau der beiden Heizleiter 18, 20 wird nachfolgend mit Bezug auf den näher an der zweiten axialen Seite 22 positionierten Heizleiter 20 erläutert. Die beiden Heizleiter 18, 20 sind grundsätzlich zueinander gleich, jedoch nicht vollkommen identisch ausgebildet, so dass diese bei Betrachtung in Richtung der Abgasheizer-Längsachse nicht vollständig deckungsgleich liegen und somit eine verbesserte thermische Wechselwirkung mit dem diese umströmenden Abgas bzw.

Gas erreicht werden kann. Die nachfolgenden Ausführungen treffen jedoch grundsätzlich auch für den Aufbau des näher an der ersten axialen Seite 16 positionierten Heizleiters 16 zu.

Der Heizleiter 18 ist in dem in den Fig. 1 bis 5 dargestellte Ausgestaltungsbeispiel eines Abgasheizers 14 aus einem einzigen Heizleiter-Materialstück 59 hergestellt. Insbesondere ist der Heizleiter 18 aus einem elektrisch leitenden, im Allgemeinen mit Metallmaterial aufgebauten bandartigen Flachmaterial aufgebaut, das zum Erhalt der gewünschten Form des Heizleiters 20 gebogen wird. Der Heizleiter 20 weist somit einander gegenüberliegende Breitseiten 40, 42 auf, welche sich im Wesentlichen in Richtung der Abgasheizer-Längsachse L erstrecken bzw. dazu parallel orientiert sind. Der Heizleiter 20 weist ferner Heizleiter-Flachseiten 44, 46 auf, welche zu den Heizleiter-Breitseiten 40, 42 und auch zur Abgasheizer-Längsachse L im Wesentlichen orthogonal orientiert sind. Durch die Ausgestaltung des Heizleiters 20 bzw. jedes Heizleiters 18, 20 mit Flachmaterial wird es somit möglich, auch bei Verwendung sehr dünnen Flachmaterials, also eines Flachmaterials, bei welchem die Flachseiten 44, 46 eine vergleichsweise geringe Ausdehnung bzw. Dicke aufweisen, durch entsprechend große Dimensionierung der Breitseiten 40, 42 eine große Wärmeübertragungsfläche bereitzustellen. Die Ausdehnung der Heizleiter-Breitseiten 40, 42 in Richtung der Abgasheizer-Längsachse kann beispielsweise mehr als das Fünffache, vorzugsweise mehr als das Zehnfache der Ausdehnung der Heizleiter-Flachseiten 44, 46 orthogonal zur Abgasheizer-Längsachse L betragen. Der bzw. jeder Heizleiter 18, 20 ist somit wesentlich breiter als dick.

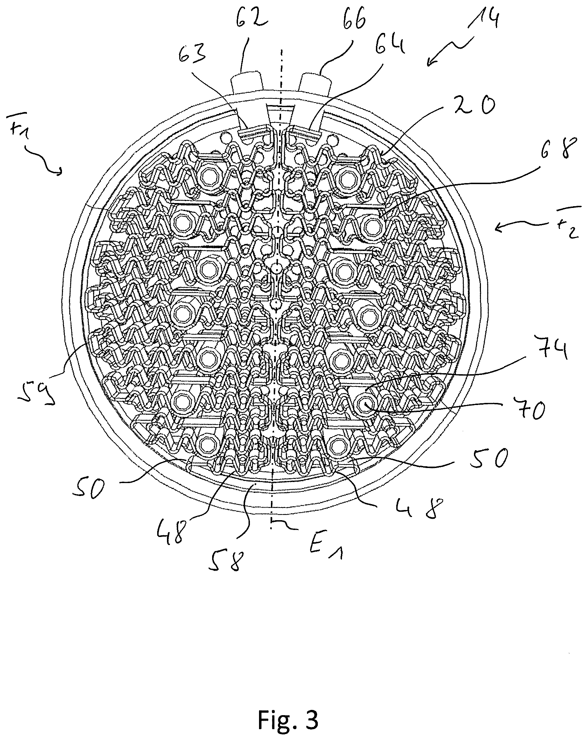

Der Heizleiter 20 ist in eine derartige Form gebogen, dass dieser zwei in der Ansicht der Fig. 3 links bzw. rechts einer die Abgasheizer-Längsachse L enthaltenden bzw. dazu parallel orientierten Symmetrieebene E₁ liegende Heizleiter-Mäanderfelder F₁, F₂ bereitstellt. In jedem der Heizleiter-Mäanderfelder F₁, F₂ ist der Heizleiter 20 mit in einer Mäanderabschnitt-Längsrichtung M langgestreckten und zueinander im Wesentlichen parallel verlaufend angeordneten Mäanderabschnitten 48 ausgebildet. Einander quer zur Mäanderabschnitt-Längsrichtung M unmittelbar benachbarte Mäanderabschnitte 48 sind in jeweils einem ihrer in der Mäanderabschnitt-Längsrichtung M gelegenen Mäanderabschnitt-Endbereiche 50, 52 vermittels eines jeweiligen Mäanderabschnitt-Verbindungsabschnitts 54, 56 miteinander verbunden. Somit ergibt sich in jedem der Heizleiter-Mäanderfelder F₁, F₂ ein mäanderartiger Verlauf von jeweils in der Mäanderabschnitt-Längsrichtung M grundsätzlich langgestreckten, quer zur Mäanderabschnitt-Längsrichtung M aufeinander folgenden Mäanderabschnitten 48.

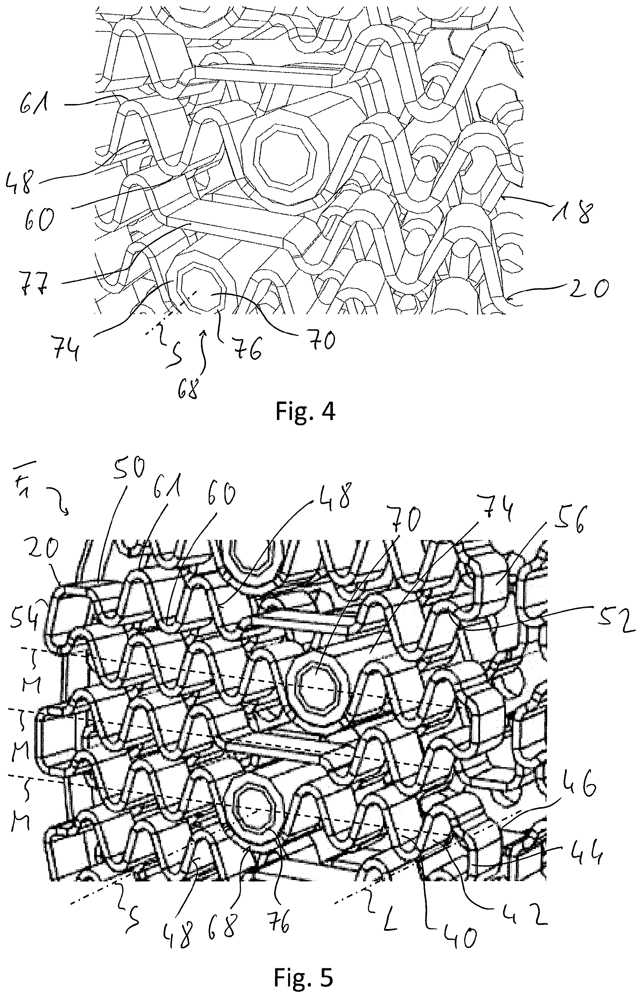

In Fig. 5 ist deutlich zu erkennen, dass die quer zur jeweiligen Mäanderabschnitt-Längsrichtung M nebeneinander liegenden Mäanderabschnitte 48 zwischen ihren jeweiligen Mäanderabschnitt-Endbereichen 50, 52 einen grundsätzlich wellenartigen Verlauf mit quer zur Mäanderabschnitt-Längsrichtung in Abstand zueinander liegenden, aufeinander folgenden Wellenscheiteln 60, 61 aufweisen. Die Wellenscheitel 60, 61 bilden somit in den Mäanderabschnitten 48 in der Mäanderabschnitt-Längsrichtung M eine alternierende Abfolge von Wellenbergen und Wellentälern.

Durch die Überlagerung dieser wellenartigen Struktur der einzelnen Mäanderabschnitte 48 einerseits und der grundsätzlich mäanderartigen Struktur des Heizleiters 20 in den Heizleiter-Mäanderfeldern F₁, F₂ wird bei kompakter Bauart eine vergleichsweise große Gesamtlänge des Heizleiters 20 und somit eine große insgesamt zur Wärmeübertragung zur Verfügung stehende Oberfläche erreicht. Gleichwohl kann die Gesamtstruktur des Heizleiters 18 in einfacher Weise an die Querschnittsgeometrie des diesen aufnehmenden Trägergehäuses 32, beispielsweise die in Fig. 3 deutlich erkennbare, im Wesentlichen kreisrunde Querschnittsgeometrie, angepasst werden und im Wesentlichen in jedem Querschnittsbereich eine näherungsweise gleiche zur Wärmeübertragung nutzbare Oberfläche bereitgestellt werden.

Bei dem in den Fig. 1 bis 5 dargestellten Ausgestaltungsbeispiel ist der Heizleiter 20 und ebenso der Heizleiter 18 aus einem einzigen bandartigen Heizleiter-Materialstück 59 aufgebaut. Dies bedeutet, dass zur Herstellung des Heizleiters 20 bzw. 18 keine Vorgänge erforderlich sind, um einzelne Materialstücke zusammenzufügen. Durch das Biegen in die gewünschte Form mit den beiden Heizleiter-Mäanderfeldern F₁, F₂ wird eine zur Symmetrieebene E₁ im Wesentlichen spiegelsymmetrische Gestalt erreicht, bei welcher bei dem in Fig. 3 unten erkennbaren Bereich die beiden Heizleiter-Mäanderfelder F₁, F₂ im Bereich ihrer jeweiligen untersten Mäanderabschnitte 48 über einen Mäanderfeld-Verbindungsabschnitt 58 aneinander anschließen, welcher an die jeweils der Umfangswand 36 nahe liegenden Mäanderabschnitt-Endbereiche 50 dieser beiden Mäanderabschnitte 48 der beiden Heizleiter-Mäanderfelder F₁, F₂ anschließt und auch einen Bestandteil des zum Aufbau des Heizleiters 20 eingesetzten Heizleiter-Materialstücks 59 bildet.

In dem in Fig. 3 oben erkennbaren Bereich stellt der Heizleiter 20 im Bereich des ersten Heizleiter-Mäanderfelds F₁ einen ersten Anschlussbereich 63 bereit, in welchem der Heizleiter 20 an ein die Umfangswand 36 und ggf. auch eine Wandung der Abgasführungskomponente 12 elektrisch isoliert durchsetzendes Anschlusselement 62 und über dieses an eine Spannungsquelle angeschlossen ist bzw. werden kann. Gleichermaßen stellt der Heizleiter 20 in seinem zweiten Heizleiter-Mäanderfeld F₂ einen zweiten Anschlussbereich 64 bereit, in welchem dieser über ein Anschlusselement 66 an eine Spannungsquelle angeschlossen werden kann. In dem dargestellten Beispiel, bei welchem zwei Heizleiter 18, 20 in Richtung der Abgasheizer-Längsachse L aufeinander folgend angeordnet sind, sind diese vorzugsweise zueinander elektrisch parallel geschaltet und mit einem jeweiligen ersten Anschlussbereich 63 an das Anschlusselement 62 elektrisch leitend angeschlossen und mit einem jeweiligen zweiten Anschlussbereich 64 an das Anschlusselement 66 elektrisch leitend angeschlossen.

Zur stabilen Halterung der Heizleiter 18, 20 am Trägergehäuse 32 ist eine Mehrzahl von stiftartigen bzw. bolzenartigen Trägerelementen 68 vorgesehen. In Fig. 3 ist zu erkennen, dass in Zuordnung zu jedem der beiden Heizleiter-Mäanderfelder F₁, F₂ zwei Reihen derartiger Trägerelemente 68 vorgesehen sind, wobei in jeder dieser Reihen unmittelbar aufeinander folgende Trägerelemente 68 quer zu einer jeweiligen Reihenlängsrichtung zueinander versetzt angeordnet sind.

Jedes Trägerelement 68 umfasst einen Trägerstift 70, der in eine zugeordnete Öffnung 72 im Gehäuseboden 34 eingesetzt ist und am Gehäuseboden 34 beispielsweise durch Verschweißen oder Verlöten, also grundsätzlich durch Materialschluss derart festgelegt ist, dass der Trägerstift 70 und damit das gesamte Trägerelement 68 mit einer Trägerelement-Längsachse S sich im Wesentlichen in Richtung der Abgasheizer-Längsachse L vom Gehäuseboden 34 erstreckt.

Jeder Trägerstift 70 ist von einer im Wesentlichen zylindrisch ausgebildeten Trägerhülse 74 umgeben. Um eine elektrische Isolierung zwischen einem jeweiligen Trägerstift 70 und der diesen umgebende Trägerhülse 74 zu erreichen, ist zwischen diesen elektrisch isolierendes Material 76, beispielsweise Keramikmaterial, wie z. B. Magnesiumoxid oder dergleichen, angeordnet. Dies kann beispielsweise dadurch erreicht werden, dass, bevor eine jeweilige Trägerhülse 74 auf einen zugeordneten Trägerstift 70 aufgeschoben bzw. aufgepresst wird, der Trägerstift 70 an seinem die Trägerhülse 74 aufnehmenden Außenumfangsbereich mit derartigem elektrisch isolierendem Material beschichtet wird.

Um bei jedem der Trägerelemente 68 einen elektrischen Kurzschluss zwischen der Trägerhülse 74 und dem Gehäuseboden 34 zu gewährleisten, stehen die Trägerstifte 70 mit ihren in die Öffnungen 72 einzusetzenden Längenabschnitten über die jeweils zugeordneten Trägerhülsen 74 hervor, so dass bei in die Öffnungen 72 eingesetzten Trägerstiften 70 die Trägerhülsen 74 in Abstand zum Gehäuseboden 34 positioniert sind.

Die Heizleiter 18, 20 sind im Bereich ihrer grundsätzlich mit wellenartiger Struktur ausgebildeten Mäanderabschnitte 48 an die Trägerhülsen 74 der Trägerelemente 68 angebunden. Dabei kann beispielsweise vorgesehen sein, dass dort, wo eine Anbindung eines Mäanderabschnitts 48 an eine Trägerhülse 74 erfolgt, ein jeweiliger Wellenscheitel 60 in der Mäanderabschnitt-Längsrichtung M etwas weiter ausgedehnt ist, als andere Wellenscheitel, so dass in diesem Bereich eine an die Außenumfangskontur einer jeweiligen Trägerhülse 74 angepasste Kontur des jeweiligen Mäanderabschnitts 48 erreicht wird. In dem eine jeweilige Trägerhülse 74 umgebenden bzw. an dieser anliegenden Längenbereich kann ein jeweiliger Mäanderabschnitt 48 durch Materialschluss, also beispielsweise Verschweißen oder Verlöten, an die Trägerhülse 74 angebunden werden.

Da die Trägerhülsen 74, ebenso wie die Trägerstifte 70, vorzugsweise mit Metallmaterial aufgebaut sind, besteht somit dort, wo die beiden Heizleiter 18, 20 in Kontakt mit der gleichen Trägerhülse 74 sind, eine elektrisch leitende Verbindung zwischen den Heizleitern 18, 20. Um gleichwohl einen gleichmäßigen Stromfluss und somit eine gleichmäßige Erwärmung zu erreichen, ist es daher vorteilhaft, zwischen allen in Stromflussrichtung aufeinander folgenden und einen derartigen Kurzschluss erzeugenden Trägerhülsen 74 die Heizleiter 18, 20 gleich lang bzw. mit gleichem elektrischem Widerstand auszugestalten.

Man erkennt in den Fig. 3 bis 5 deutlich, dass beispielsweise die Anbindung der einander unmittelbar benachbarten Mäanderabschnitte 48 in einem jeweiligen Heizleiter-Mäanderfeld F₁, F₂ derart sein kann, dass nur jeder zweite Mäanderabschnitt 48 an ein Trägerelement 68 bzw. eine Trägerhülse 74 angebunden ist, während dazwischen liegende Mäanderabschnitte 48 dort, wo in jedem der beiden Heizleiter-Mäanderfelder F₁, F₂ die Reihen von Trägerelementen 68 gebildet sind, eine Unterbrechung der wellenartigen Struktur mit einem im Wesentlichen geradlinig in der Mäanderabschnitt-Längsrichtung M sich erstreckenden Längenabschnitt 77 aufweisen, um ausreichend Bauraum zur Positionierung eines jeweiligen Trägerelements 68 ohne der Gefahr eines elektrischen Kurzschlusses bereitzustellen.

Um bei dem in den Fig. 1 bis 5 dargestellten Aufbau grundsätzlich einen Kurzschluss zwischen den beiden Heizleitern 18, 20 dort, wo dies nicht der Fall sein soll, zu vermeiden, können diese in Richtung der Abgasheizer-Längsachse L mit geringfügigem Abstand zueinander angeordnet sein. Um dies zu erreichen, können beispielsweise die Trägerhülsen 14 zum Erzeugen eines derartigen Zwischenraums einen nach radial außen vorspringenden Abstandshalterbereich aufweisen, an welchen die beiden Heizleiter 18, 20 dort, wo sie eine jeweilige Abstandshülse 74 berühren, axial anstoßen können.

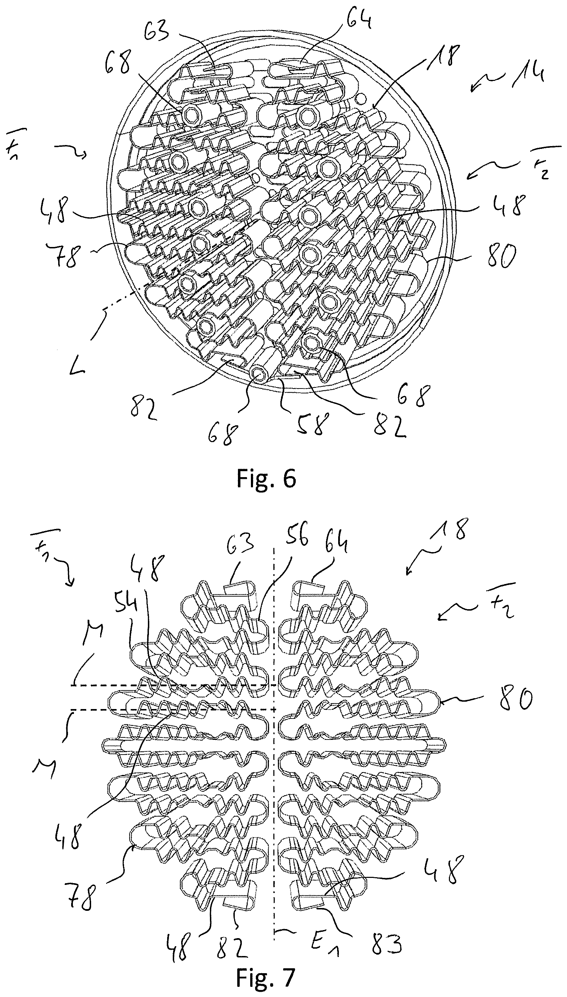

Eine alternative Ausgestaltungsart eines Abgasheizers 14 ist in den Fig. 6 und 7 dargestellt. Bei diesem Abgasheizer 14 wird grundsätzlich nur ein Heizleiter 18 eingesetzt, welcher in Richtung der Abgasheizer-Längsachse L beispielsweise länger gebaut sein kann, als jeder der Heizleiter 18, 20 des vorangehend beschriebenen Ausgestaltungsbeispiels. Der in den Fig. 6 und 7 eingesetzte und gleichermaßen mit zwei zur Symmetrieebene E₁ im Wesentlichen spiegelsymmetrisch aufgebauten Heizleiter-Mäanderfeldern F₁, F₂ ausgebildete Heizleiter 18 ist mit zwei separaten Heizleiter-Materialstücken 78, 80 aufgebaut. Wie dies in Fig. 7 zu erkennen ist, ist der grundsätzliche Verlauf des Heizleiters 18 in den beiden Heizleiter-Mäanderfeldern F₁, F₂ gleich gestaltet, wie in den vorangehend beschriebenen Ausgestaltungsbeispielen. Das heißt, auch hier sind die Mäanderabschnitte 48 in einer jeweiligen Mäanderabschnitt-Längsrichtung M langgestreckt und mit wellenartiger Struktur ausgebildet. In ihren Mäanderabschnitt-Endbereichen 50, 52 sind einander unmittelbar benachbarte Mäanderabschnitte 48 durch die Mäanderabschnitt-Verbindungsabschnitte 54, 56 miteinander verbunden. In Fig. 7 ist deutlich zu erkennen, dass die beiden ein jeweiliges Heizleiter-Mäanderfeld F₁, F₂ bereitstellenden Heizleiter-Materialstücke 78, 80 grundsätzlich gleich geformt sind, so dass wieder der vorangehend bereits angesprochene im Wesentlichen spiegelsymmetrische Aufbau bezüglich der Symmetrieebene E₁ erreicht wird. Dies bedeutet, dass für die beiden Heizleiter-Mäanderfelder F₁, F₂ gleiche Teile verwendet werden können, was den Aufbau einfacher und kostengünstiger macht.

In jedem der Heizleiter-Mäanderfelder F₁, F₂ ist ein Anschlussbereich 63 bzw. 64 bereitgestellt. In den von den Anschlussbereichen 63 bzw. 64 entfernt liegenden Endbereichen der jeweiligen Heizleiter-Materialstücke 78, 70 bzw. Mäanderfelder F₁, F₂ kann ein jeweiliger letzter und beispielsweise im Wesentlichen nicht wellenförmig gestalteter Mäanderabschnitt 48 einen Verbindungsbereich 82, 83 bereitstellen. Diese Verbindungsbereiche 82, 83 können mit dem nunmehr als separates Bauteil bereitgestellten Mäanderfeld-Verbindungsabschnitt 58 verbunden sein, um die beiden grundsätzlich separat aufgebauten Heizleiter-Mäanderfelder F₁, F₂ elektrisch leitend miteinander zu verbinden. Man erkennt in Fig. 6, dass auch diesem Mäanderfeld-Verbindungsabschnitt 58 ein Trägerelement 68 zugeordnet sein kann, so dass in bzw. nahe den Verbindungsbereichen 82, 83 die beiden Heizleiter-Mäanderfelder F₁, F₂ über ein diese elektrisch verbindendes Bauteil, nämlich den Mäanderfeld-Verbindungsabschnitt 58 und ein mit diesem in der vorangehend beschriebenen Art und Weise verbundenes Trägerelement 68 an dem Trägergehäuse 32 getragen sind.

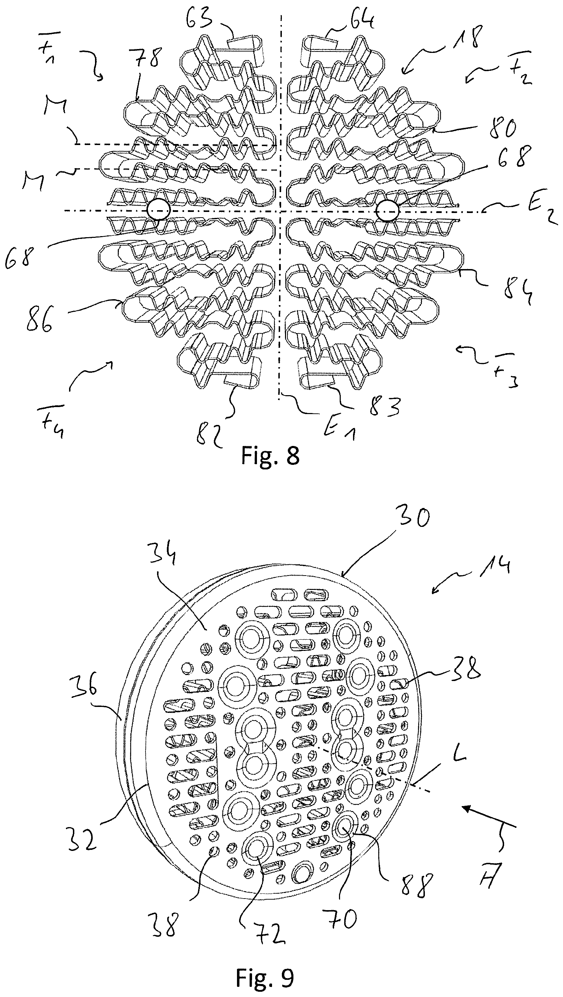

Eine weitere Ausgestaltungsart eines Abgasheizers bzw. eines Heizleiters 18 für diesen ist in Fig. 8 dargestellt. Es ist darauf hinzuweisen, dass bei dieser Ausgestaltungsart selbstverständlich auch bei der in den Fig. 6 und 7 dargestellten Ausgestaltungsart, das Trägergehäuse 32 grundsätzlich die mit Bezug auf die Fig. 1 bis 5 bereits beschriebene Struktur aufweisen kann

Der in Fig. 8 dargestellte Heizleiter 18 ist mit insgesamt vier Heizleiter-Mäanderfeldern F₁, F₂, F₃, F₄ aufgebaut. Jedes dieser Heizleiter-Mäanderfelder F₁, F₂, F₃, F₄ ist mit einem separaten Heizleiter-Materialstück 78, 80, 84, 86 aufgebaut. Die zum Aufbau des ersten Heizleiter-Mäanderfelds F₁ und des zweiten Heizleiter-Mäanderfelds F₂ eingesetzten Materialstücke 78, 80 stellen die Anschlussbereiche 63, 64 bereit. Die zum Aufbau des dritten Heizleiter-Mäanderfelds F₃ und des vierten Heizleiter-Mäanderfelds F₄ eingesetzten Materialstücke 84, 86 stellen die Verbindungsbereiche 82, 83 bereit, über welche das dritte Heizleiter-Mäanderfeld F₃ und das vierte Heizleiter-Mäanderfeld F₄ unter Einsatz des beispielsweise in Fig. 6 erkennbaren Mäanderfeld-Verbindungsabschnitts 58 miteinander verbunden werden können. Dieses kann wiederum über ein Trägerelement 68 am Trägergehäuse 32 getragen sein.

Dort, wo das zweite Heizleiter-Mäanderfeld F₂ an das dritte Heizleiter-Mäanderfeld F₃ angrenzt bzw. das erste Heizleiter-Mäanderfeld F₁ an das vierte Heizleiter-Mäanderfeld F₄ angrenzt, können diese über jeweils ein prinzipartig dargestelltes Trägerelement 68 miteinander mechanisch und elektrisch leitend verbunden sein und am Gehäuseboden 34 des Trägergehäuses 32 getragen sein.

Auch bei dem in Fig. 8 dargestellten Heizleiter 18 können zum Aufbau der vier Heizleiter-Mäanderfelder F₁, F₂, F₃, F₄ zueinander identisch geformt bzw. gebogene Heizleiter-Materialstücke 78, 80, 84, 86 eingesetzt werden. Dies führt dazu, dass einander benachbarte Heizleiter-Mäanderfelder bezüglich zweier Symmetrieebenen E₁ und E₂ zueinander paarweise jeweils spiegelsymmetrisch ausgebildet bzw. angeordnet sind.

Durch den Einsatz von insgesamt vier Heizleiter-Materialstücken 78, 80, 84, 86 bzw. vier damit aufgebauten Heizleiter-Mäanderfeldern F₁, F₂, F₃, F₄ ist die Länge jedes einzelnen Heizleiter-Materialstücks 78, 80, 84, 86 deutlich kürzer, so dass der Vorgang zum Herstellen bzw. Biegen deutlich einfacher durchgeführt werden kann.

Die Fig. 9 und 10 zeigen eine alternative Ausgestaltung des bei einem Abgasheizer 14 verwendeten Trägergehäuses 32. Man erkennt in Fig. 9, dass im Gehäuseboden 34 Abgasdurchströmöffnungen 38 unterschiedlicher Formgebung vorgesehen sind. Ein Teil der Abgasdurchströmöffnungen 38 ist mit kreisförmigem Querschnitt ausgebildet, während ein anderer Teil langlochartig ausgebildet ist und beispielsweise in einer Richtung langgestreckt ist, in welcher auch die jeweiligen Mäanderabschnitte 48 in ihrer jeweiligen Mäanderabschnitt-Längsrichtung M langgestreckt sind.

Durch die Formgebung bzw. die Variation der Formgebung der Abgasdurchströmöffnungen 38 wird es möglich, das Abgas in definierter Art und Weise in verschiedene Bereiche des Innenraums des Trägergehäuses 32 zu leiten, um somit eine definierte Anströmung bzw. Umströmung des bzw. der Heizleiter zu erreichen. Auch ist erkennbar, dass dort, wo im Gehäuseboden 34 die Öffnungen 72 zur Aufnahme der Trägerstifte 70 vorgesehen sind, am Gehäuseboden 34 axiale Ausformungen 88 vorgesehen sein können, um in diesem Bereich eine erhöhte Stabilität zu erreichen.

In Fig. 10 ist zu erkennen, dass der Gehäuseboden 34 des Trägergehäuses 32, obgleich dieser grundsätzlich näherungsweise orthogonal bzw. quer zur Abgasheizer-Längsachse L angeordnet ist, nach außen, also grundsätzlich konvex gewölbt sein kann. Auch dadurch wird einerseits die Stabilität im Aufbau erhöht, andererseits ist eine definierte Strömungsführung des in der Abgas-Hauptströmungsrichtung A auf den Abgasheizer 14 zu strömenden Abgases gewährleistet.

Weiter ist in Fig. 10 zu erkennen, dass der bzw. die Heizleiter 18, 20 und damit auch die diese tragenden Trägerelemente 68 so dimensioniert sein können, dass diese an der zweiten axialen Seite 22 über die Umfangswand 36 des Trägergehäuses 32 hervorstehen. Da an dieser zweiten axialen Seite das Trägergehäuse 32 grundsätzlich offen ist, besteht kein Konflikt mit dem Trägergehäuse 32, und die zur Wärmeübertragung zur Verfügung stehende Oberfläche des bzw. der Heizleiter 18, 20 kann weiter vergrößert werden.

Es ist darauf hinzuweisen, dass selbstverständlich die vorangehend mit Bezug auf die Fig. 10 beschriebene Struktur des Trägergehäuses 32 bzw. der in diesem aufgenommenen Heizleiter 18, 20 unabhängig von der in Fig. 9 oder in Fig. 1 dargestellten Formgebung oder Anordnung der Abgasdurchtrittsöffnungen 38 vorgesehen sein kann und auch unabhängig davon, ob in dem Trägergehäuse 32 ein in axialer Richtung etwas weiter ausgedehnter Heizleiter oder zwei oder mehr in axialer Richtung aufeinander folgend angeordnete Heizleiter vorgesehen sind.

## Patentansprüche

1. Abgasheizer für eine Abgasanlage einer Brennkraftmaschine, umfassend eine von Abgas im Wesentlichen in Richtung einer Abgasheizer-Längsachse (L) durchströmbare Trägeranordnung (30) und wenigstens einen an der Trägeranordnung (30) getragenen Heizleiter (18, 20), wobei der wenigstens eine Heizleiter (18, 20) mit zum Bereitstellen eines wenigstens bereichsweise mäanderartigen Heizleiterverlaufs gebogenem Flachmaterial mit einander gegenüberliegenden Heizleiter-Flachseiten (44, 46) und einander gegenüberliegenden Heizleiter-Breitseiten (40, 42) aufgebaut ist, wobei der wenigstens eine Heizleiter (18, 20) wenigstens ein Heizleiter-Mäanderfeld (F₁, F₂, F₃, F₄) mit einer Mehrzahl von in Richtung einer Mäanderabschnitt-Längsrichtung (M) langgestreckten, zueinander im Wesentlichen parallelen Mäanderabschnitten (48) umfasst, wobei quer zur Mäanderabschnitt-Längsrichtung (M) einander unmittelbar benachbarte Mäanderabschnitte (48) in jeweils einem ihrer Mäanderabschnitt-Endbereiche (50, 52) durch einen Mäanderabschnitt-Verbindungsabschnitt (54, 56) miteinander verbunden sind, **dadurch gekennzeichnet, dass** wenigstens ein Mäanderabschnitt (48) zwischen seinen Mäanderabschnitt-Endbereichen (50, 52) wenigstens bereichsweise wellenartig mit einer Mehrzahl von in der Mäanderabschnitt-Längsrichtung (M) aufeinander folgenden Wellenscheiteln (60, 61) ausgebildet ist.

2. Abgasheizer nach Anspruch 1, **dadurch gekennzeichnet, dass** der wenigstens eine Heizleiter (18, 20) mit seinen Heizleiter-Breitseiten (40, 42) sich im Wesentlichen in Richtung der Abgasheizer-Längsachse (L) erstreckend angeordnet ist und mit seinen Heizleiter-Flachseiten (44, 46) sich im Wesentlichen orthogonal zur Abgasheizer-Längsachse (L) erstreckend angeordnet ist.

3. Abgasheizer nach Anspruch 1 oder 2, **dadurch gekennzeichnet**, im Wesentlichen jeder Mäanderabschnitt (48) zwischen seinen Mäanderabschnitt-Endbereichen (50, 52) wenigstens bereichsweise wellenartig mit einer Mehrzahl von in der Mäanderabschnitt-Längsrichtung (M) aufeinander folgenden Wellenscheiteln (60, 61) ausgebildet ist.

4. Abgasheizer nach einem der Ansprüche 1-3, **dadurch gekennzeichnet, dass** der wenigstens eine Heizleiter (18, 20) wenigstens zwei Heizleiter-Mäanderfelder (F₁, F₂, F₃, F₄) umfasst, wobei ein erstes Heizleiter-Mäanderfeld (F₁) der wenigstens zwei Heizleiter-Mäanderfelder (F₁, F₂, F₃, F₄) einen ersten Anschlussbereich (60) zum Anschließen des wenigstens einen Heizleiters (18, 20) an eine Spannungsquelle bereitstellt und ein zweites Heizleiter-Mäanderfeld (F₂) der wenigstens zwei Heizleiter-Mäanderfelder (F₁, F₂, F₃, F₄) einen zweiten Anschlussbereich (64) zum Anschließen des wenigstens einen Heizleiters (18, 20) an die Spannungsquelle bereitstellt.

5. Abgasheizer nach einem der Ansprüche 1-4, **dadurch gekennzeichnet, dass** wenigstens ein Heizleiter-Mäanderfeld (F₁, F₂, F₃, F₄) durch ein einziges Heizleiter-Materialstück (59, 78, 80, 84, 86) bereitgestellt ist.

6. Abgasheizer nach Anspruch 5, **dadurch gekennzeichnet, dass** alle Heizleiter-Mäanderfelder (F₁, F₂) durch ein einziges Heizleiter-Materialstück (59) bereitgestellt sind.

7. Abgasheizer nach einem der Ansprüche 1-5, **dadurch gekennzeichnet, dass** wenigstens zwei Heizleiter-Mäanderfelder (F₁, F₂, F₃, F₄) durch separate Heizleiter-Materialstücke (78, 80, 84, 86) bereitgestellt sind.

8. Abgasheizer nach Anspruch 7, **dadurch gekennzeichnet, dass** wenigstens zwei, vorzugsweise alle durch separate Heizleiter-Materialstücke (78, 80, 84, 86) bereitgestellte Heizleiter-Mäanderfelder (F₁, F₂, F₃, F₄) zueinander im Wesentlichen formgleich ausgebildet sind.

9. Abgasheizer nach einem der Ansprüche 1-8, **dadurch gekennzeichnet, dass** wenigstens zwei durch separate Heizleiter-Materialstücke 78, 80, 84, 86) bereitgestellte Heizleiter-Mäanderfelder (F₁, F₂, F₃, F₄) bezüglich einer die Heizleiter-Längsachse (L) enthaltenden Symmetrieebene (E₁, E₂) zueinander im Wesentlichen spiegelsymmetrisch angeordnet sind, vorzugsweise wobei der Heizleiter (18) mit zwei durch separate Heizleiter-Materialstücke (78, 80) bereitgestellten Heizleiter-Mäanderfeldern (F₁, F₂) ausgebildet ist und die beiden Heizleiter-Mäanderfelder (F₁, F₂) bezüglich einer die Heizleiter-Längsachse (L) enthaltenden Symmetrieebene (E₁) zueinander im Wesentlichen spiegelsymmetrisch angeordnet sind oder der Heizleiter (18) mit vier durch separate Heizleiter-Materialstücke (78, 80, 84, 86) bereitgestellten Heizleiter-Mäanderfeldern (F₁, F₂, F₃, F₄) ausgebildet ist und die vier Heizleiter-Mäanderfelder (F₁, F₂, F₃, F₄) bezüglich zwei die Heizleiter-Längsachse (L) enthaltenden und zueinander orthogonalen Symmetrieebenen (E₁, E₂) jeweils paarweise zueinander im Wesentlichen spiegelsymmetrisch angeordnet sind.

10. Abgasheizer nach einem der Ansprüche 1-9, **dadurch gekennzeichnet, dass** die Trägeranordnung (30) ein Trägergehäuse (32) mit einem an einer ersten axialen Seite (16) des wenigstens einen Heizleiters (18, 20) angeordneten, im Wesentlichen quer zur Abgasheizer-Längsachse (L) sich erstreckenden Gehäuseboden (34) umfasst, wobei in dem Gehäuseboden (34) eine Mehrzahl von Abgasdurchströmöffnungen (38) vorgesehen ist, und wobei der wenigstens eine Heizleiter (18, 20) durch eine Mehrzahl von Trägerelementen (68) an dem Gehäuseboden (34) getragen ist.

11. Abgasheizer nach Anspruch 10, **dadurch gekennzeichnet, dass** wenigstens ein, vorzugsweise jedes Trägerelement (68) einen an dem Gehäuseboden (34) festgelegten Trägerstift (70) sowie eine unter Zwischenlagerung von elektrisch isolierendem Material (76), vorzugsweise Magnesiumoxid-Material, an dem Trägerstift (70) getragene und an dem wenigstens einen Heizleiter (18, 20) festgelegte Trägerhülse (74) umfasst.

12. Abgasheizer nach Anspruch 11, **dadurch gekennzeichnet, dass** der Trägerstift (70) des wenigstens einen, vorzugsweise jedes Trägerelements (68) mit dem Gehäuseboden (34) durch Materialschluss, vorzugsweise Verschweißen oder Verlöten, verbunden ist, und dass die Trägerhülse (74) des wenigstens einen, vorzugsweise jedes Trägerelements (68) mit dem wenigstens einen Heizleiter (18, 20) durch Materialschluss, vorzugsweise Verschweißen oder Verlöten, verbunden ist.

13. Abgasheizer nach Anspruch 7 und einem der Ansprüche 10-12, **dadurch gekennzeichnet, dass** wenigstens zwei als separate Heizleiter-Materialstücke (78, 80, 84, 86) bereitgestellte Heizleiter-Mäanderfelder (F₁, F₂, F₃, F₄) vermittels wenigstens eines diese an dem Trägergehäuse (32) tragenden Trägerelements (68) elektrisch leitend miteinander verbunden sind.

14. Abgasheizer nach einem der Ansprüche 10-13, **dadurch gekennzeichnet, dass** das Trägergehäuse (32) eine radial außen an den Gehäuseboden (34) anschließende Umfangswand (36) aufweist.

15. Abgasheizer nach Anspruch 14, **dadurch gekennzeichnet, dass** das Trägergehäuse (32) mit dem Gehäuseboden (34) und der Umfangswand (36) topfartig ausgebildet ist, und dass der wenigstens eine Heizleiter (18, 20) an einer zweiten axialen Seite (22) im Wesentlichen nicht von der Trägeranordnung (30) überdeckt ist oder/und der wenigstens eine Heizleiter (18, 20) an der zweiten axialen Seite (22) axial über die Umfangswand (36) hervorsteht.

16. Abgasanlage für eine Brennkraftmaschine, umfassend wenigstens eine Abgasbehandlungseinheit (24), vorzugsweise Katalysator oder/und Partikelfilter, und wenigstens einen Abgasheizer (14) nach einem der vorangehenden Ansprüche in einer Abgas-Hauptströmungsrichtung (A) stromaufwärts bezüglich der wenigstens einen Abgasbehandlungseinheit (24).

## Claims

1. An exhaust gas heater for an exhaust gas system of an internal combustion engine, comprising a carrier arrangement (30) through which exhaust gas can flow substantially in the direction of an exhaust gas heater longitudinal axis (L) and at least one heating conductor (18, 20) supported on the carrier arrangement (30), wherein the at least one heating conductor (18, 20) is constructed with bent flat material, for the provision of a heating conductor profile which is meandering at least in regions, with heating conductor flat sides (44, 46) opposite one another and heating conductor broad sides (40, 42) opposite one another, wherein the at least one heating conductor (18, 20) comprises at least one heating conductor meandering field (F₁, F₂, F₃, F₄) with a multiplicity of meandering portions (48) which are longitudinally extended in the direction of a meandering portion longitudinal direction (M) and are substantially parallel to one another, wherein directly adjacent meandering portions (48) in in each case one of their meandering portion end regions (50, 52) are connected to one another by a meandering portion connecting portion (54, 56) transversely to the meandering portion longitudinal direction (M), **characterized in that** at least one meandering portion (48) is formed between its meandering portion end regions (50, 52) at least in regions in an undulating manner with a multiplicity of consecutive wave crests (60, 61) in the meandering portion longitudinal direction (M).

2. The exhaust gas heater as claimed in claim 1, **characterized in that** the at least one heating conductor (18, 20) with its heating conductor broad sides (40, 42) is arranged extending substantially in the direction of the exhaust gas heater longitudinal axis (L) and with its heating conductor flat sides (44, 46) is arranged extending substantially orthogonally to the exhaust gas heater longitudinal axis (L).

3. The exhaust gas heater as claimed in claims 1 or 2, **characterized in that** substantially each meandering portion (48) is formed between its meandering portion end regions (50, 52) at least in regions in an undulating manner with a multiplicity of consecutive wave crests (60, 61) in the meandering portion longitudinal direction (M).

4. The exhaust gas heater as claimed in one of claims 1-3, **characterized in that** the at least one heating conductor (18, 20) comprises at least two heating conductor meandering fields (F₁, F₂, F₃, F₄), wherein a first heating conductor meandering field (F₁) of the at least two heating conductor meandering fields (F₁, F₂, F₃, F₄) provides a first connector region (60) for connecting the at least one heating conductor (18, 20) to a voltage source and a second heating conductor meandering field (F₂) of the at least two heating conductor meandering fields (F₁, F₂, F₃, F₄) provides a second connector region (60) for connecting the at least one heating conductor (18, 20) to the voltage source.

5. The exhaust gas heater as claimed in any one of claims 1-4, **characterized in that** at least one heating conductor meandering field (F₁, F₂, F₃, F₄) is provided by a single heating conductor material piece (59, 78, 80, 84, 86).

6. The exhaust gas heater as claimed in claim 5, **characterized in that** all the heating conductor meandering fields (F₁, F₂) are provided by a single heating conductor material piece (59).

7. The exhaust gas heater as claimed in any one of claims 1-5, **characterized in that** at least two heating conductor meandering fields (F₁, F₂, F₃, F₄) are provided by separate heating conductor material pieces (78, 80, 84, 86).

8. The exhaust gas heater as claimed in claim 7, **characterized in that** at least two, preferably all the heating conductor meandering fields (F₁, F₂, F₃, F₄) provided by separate heating conductor material pieces (78, 80, 84, 86) are formed to have substantially the same shape as one another.

9. The exhaust gas heater as claimed in any one of claims 1-8, **characterized in that** at least two heating conductor meandering fields (F₁, F₂, F₃, F₄) provided by separate heating conductor material pieces (78, 80, 84, 86) are arranged substantially in mirror symmetry to one another in relation to a plane of symmetry (E₁, E₂) which contains the heating conductor longitudinal axis (L), preferably wherein the heating conductor (18) is formed with two heating conductor meandering fields (F₁, F₂) provided by separate heating conductor material pieces (78, 80) and the two heating conductor meandering fields (F₁, F₂) are arranged substantially in mirror symmetry to one another in relation to a plane of symmetry (E₁) containing the heating conductor longitudinal axis (L) or the heating conductor (18) is formed with four heating conductor meandering fields (F₁, F₂, F₃, F₄) provided by separate heating conductor material pieces (78, 80, 84, 86) and the four heating conductor meandering fields (F₁, F₂, F₃, F₄) are arranged in each case in pairs substantially in mirror symmetry to one another in relation to two planes of symmetry (E₁, E₂) which contain the heating conductor longitudinal axis (L) and are orthogonal to one another.

10. The exhaust gas heater as claimed in any one of claims 1-9, **characterized in that** the carrier arrangement (30) comprises a carrier housing (32) with a housing base (34) which is arranged on a first axial side (16) of the at least one heating conductor (18, 20) and extends substantially transversely to the exhaust gas heater longitudinal axis (L), wherein a multiplicity of exhaust gas throughflow openings (38) is provided in the housing base (34), and wherein the at least one heating conductor (18, 20) is supported by a multiplicity of carrier elements (68) on the housing base (34).

11. The exhaust gas heater as claimed in claim 10, **characterized in that** at least one, preferably each carrier element (68) comprises a carrier pin (70) fixed on the housing base (34) as well as a carrier sleeve (74) supported on the carrier pin (70), with the interposition of electrically insulating material (76), preferably magnesium oxide material, and fixed on the at least one heating conductor (18, 20).

12. The exhaust gas heater as claimed in claim 11, **characterized in that** the carrier pin (70) of the at least one, preferably each carrier element (68) is connected to the housing base (34) by material connection, preferably welding or soldering, and that the carrier sleeve (74) of the at least one, preferably each carrier element (68) is connected to the at least one heating conductor (18, 20) by material connection, preferably welding or soldering.

13. The exhaust gas heater as claimed in claim 7 and any one of claims 10-12, **characterized in that** at least two heating conductor meandering fields (F₁, F₂, F₃, F₄) provided as separate heating conductor material pieces (78, 80, 84, 86) are connected to one another in an electrically conducting manner by means of at least one carrier element (68) which supports these on the carrier housing (32).

14. The exhaust gas heater as claimed in any one of claims 10-13, **characterized in that** the carrier housing (32) has a circumferential wall (36) which adjoins the housing base (34) radially on the outside.

15. The exhaust gas heater as claimed in claim 14, **characterized in that** the carrier housing (32) is formed in a pot-shaped manner with the housing base (34) and the circumferential wall (36), and the at least one heating conductor (18, 20) on a second axial side a (22) is substantially not covered by the carrier arrangement (30) or/and the at least one heating conductor (18, 20) on the second axial side (22) projects axially over the circumferential wall (36).

16. An exhaust gas system for an internal combustion engine, comprising at least one exhaust gas treatment unit (24), preferably catalytic converter or/and particle filter, and at least one exhaust gas heater (14) as claimed in any one of the preceding claims in an exhaust gas main flow direction (A) upstream in relation to the at least one exhaust gas treatment unit (24).

## Revendications

1. Un réchauffeur des gaz d'échappement pour un système de gaz d'échappement d'un moteur à combustion interne, comprenant un dispositif de support (30) à travers lequel les gaz d'échappement peuvent s'écouler sensiblement dans la direction d'un axe longitudinal du réchauffeur des gaz d'échappement (L) et au moins un conducteur chauffant (18, 20) supporté sur le dispositif de support (30),
dans lequel ledit au moins un conducteur chauffant (18, 20) est construit avec un matériau plat plié, pour la mise à disposition d'un profil de conducteur chauffant qui est en méandres au moins dans certaines régions, avec des côtés plats de conducteur chauffant (44, 46) opposés l'un à l'autre et des côtés larges de conducteur chauffant (40, 42) opposés l'un à l'autre, dans lequel ledit au moins un conducteur chauffant (18, 20) comprend au moins un champ de méandres de conducteur chauffant (F₁, F₂, F₃, F₄) avec une multiplicité de parties de méandres (48) qui s'étendent longitudinalement dans la direction longitudinale des parties de méandres (M) et sont sensiblement parallèles les unes aux autres, dans lequel des parties de méandres (48) directement adjacentes sont reliées entre elles par une portion de liaison de partie de méandres (54, 56) transversalement à la direction longitudinale de la partie de méandres (M) dans chacune de leurs régions d'extrémité de partie de méandres (50, 52),
**caractérisé en ce qu'**au moins une partie de méandres (48) est formée entre ses régions d'extrémité de partie de méandres (50, 52) au moins dans des régions de manière ondulée avec une multiplicité de crêtes d'onde consécutives (60, 61) dans la direction longitudinale de la partie de méandres (M).

2. Le réchauffeur des gaz d'échappement selon la revendication 1, **caractérisé en ce que** ledit au moins un conducteur chauffant (18, 20) est disposé avec ses côtés larges de conducteur chauffant (40, 42) s'étendant sensiblement dans la direction de l'axe longitudinal du réchauffeur des gaz d'échappement (L) et avec ses côtés plats de conducteur chauffant (44, 46) s'étendant sensiblement orthogonalement à l'axe longitudinal du réchauffeur des gaz d'échappement (L).

3. Le réchauffeur des gaz d'échappement selon les revendications 1 ou 2, **caractérisé en ce que** sensiblement chaque partie de méandres (48) est formée entre ses régions d'extrémité de partie de méandres (50, 52) au moins dans des régions de manière ondulée avec une multiplicité de crêtes d'onde consécutives (60, 61) dans la direction longitudinale de la partie de méandres (M).

4. Le réchauffeur des gaz d'échappement selon l'une des revendications 1 à 3,
**caractérisé en ce que** ledit au moins un conducteur chauffant (18, 20) comprend au moins deux champs de méandres de conducteur chauffant (F₁, F₂, F₃, F₄), dans lequel un premier champ de méandres de conducteur chauffant (F₁) desdits au moins deux champs de méandres de conducteur chauffant (F₁, F₂, F₃, F₄) fournit une première région de connexion (60) pour connecter ledit au moins un conducteur chauffant (18, 20) à une source de tension et un deuxième champ de méandres de conducteur chauffant (F₂) desdits au moins deux champs de méandres de conducteur chauffant (F₁, F₂, F₃, F₄) fournit une deuxième région de connexion (60) pour connecter ledit au moins un conducteur chauffant (18, 20) à la source de tension.

5. Le réchauffeur des gaz d'échappement selon l'une des revendications 1 à 4,
**caractérisé en ce qu'**au moins un champ de méandres de conducteur chauffant (F₁, F₂, F₃, F₄) est constitué d'une seule pièce de matériau de conducteur chauffant (59, 78, 80, 84, 86).

6. Le réchauffeur des gaz d'échappement selon la revendication 5, **caractérisé en ce que** tous les champs de méandres de conducteur chauffant (F₁, F₂) sont fournis par une seule pièce de matériau de conducteur chauffant (59).

7. Le réchauffeur des gaz d'échappement selon l'une des revendications 1 à 5,
**caractérisé en ce qu'**au moins deux champs de méandres de conducteur chauffant (F₁, F₂, F₃, F₄) sont fournis par des pièces de matériau de conducteur chauffant distinctes (78, 80, 84, 86).

8. Le réchauffeur des gaz d'échappement selon la revendication 7, **caractérisé en ce qu'**au moins deux, de préférence tous les champs de méandres de conducteur chauffant (F₁, F₂, F₃, F₄), constitués de pièces de matériau de conducteur chauffant distinctes (78, 80, 84, 86), sont formés de manière à avoir sensiblement la même forme les uns que les autres.

9. Le réchauffeur des gaz d'échappement selon l'une des revendications 1 à 8,
**caractérisé en ce qu'**au moins deux champs de méandres de conducteur chauffant (F₁, F₂, F₃, F₄) constitués de pièces de matériau de conducteur chauffant distinctes (78, 80, 84, 86) sont agencés sensiblement en symétrie de mirroir l'un par rapport à l'autre par rapport à un plan de symétrie (E₁, E₂) contenant l'axe longitudinal du conducteur chauffant (L), de préférence dans lequel le conducteur chauffant (18) est formé de deux champs de méandres de conducteur chauffant (F₁, F₂) constitués de pièces de matériau de conducteur chauffant distinctes (78, 80) et les deux champs de méandres de conducteur chauffant (F₁, F₂) sont disposés sensiblement en symétrie de mirroir l'un par rapport à l'autre par rapport à un plan de symétrie (E₁) contenant l'axe longitudinal du conducteur chauffant (L) ou le conducteur chauffant (18) est formé de quatre champs de méandres de conducteur chauffant (F₁, F₂, F₃, F₄) formés par des pièces de matériau de conducteur chauffant séparés (78, 80, 84, 86) et les quatre champs de méandres de conducteur chauffant (F₁, F₂, F₃, F₄) sont disposés par paires sensiblement en symétrie de mirroir l'un par rapport à l'autre par rapport à deux plans de symétrie (E₁, E₂) contenant l'axe longitudinal du conducteur chauffant (L) et sont orthogonaux l'un par rapport à l'autre.

10. Le réchauffeur des gaz d'échappement selon l'une des revendications 1 à 9,
**caractérisé en ce que** le dispositif de support (30) comprend un boîtier de support (32) avec une base du boîtier (34) qui est disposée sur un premier côté axial (16) dudit au moins un conducteur chauffant (18, 20) et s'étend sensiblement transversalement à l'axe longitudinal du réchauffeur des gaz d'échappement (L), dans lequel une multiplicité d'ouvertures de passage des gaz d'échappement (38) est prévue dans la base du boîtier (34), et dans lequel ledit au moins un conducteur chauffant (18, 20) est supporté par une multiplicité d'éléments de support (68) sur la base du boîtier (34).

11. Le réchauffeur des gaz d'échappement selon la revendication 10, **caractérisé en ce qu'**au moins un, de préférence chaque élément de support (68) comprend une tige de support (70) fixée sur la base du boîtier (34) ainsi qu'un manchon de support (74) supporté sur la tige de support (70), avec interposition d'un matériau électriquement isolant (76), de préférence de l'oxyde de magnésium, et fixé sur ledit au moins un conducteur chauffant (18, 20).

12. Le réchauffeur des gaz d'échappement selon la revendication 11, **caractérisé en ce que** la tige de support (70) dudit au moins un, de préférence de chaque élément de support (68) est reliée à la base du boîtier (34) par liaison de matière, de préférence par soudage ou brasage, et **en ce que** le manchon de support (74) dudit au moins un, de préférence de chaque élément de support (68) est relié audit au moins un conducteur chauffant (18, 20) par liaison de matière, de préférence par soudage ou brasage.

13. Le réchauffeur des gaz d'échappement selon la revendication 7 et l'une des revendications 10 à 12, **caractérisé en ce qu'**au moins deux champs de méandres de conducteur chauffant (F₁, F₂, F₃, F₄) prévus sous forme de pièces de matériau de conducteur chauffant distinctes (78, 80, 84, 86) sont reliés entre eux de manière électriquement conductrice au moyen d'au moins un élément de support (68) qui les supporte sur le boîtier de support (32).

14. Le réchauffeur des gaz d'échappement selon l'une des revendications 10 à 13,
**caractérisé en ce que** le boîtier de support (32) comporte une paroi circonférentielle (36) qui est adjacente à la base du boîtier (34) radialement à l'extérieur.

15. Le réchauffeur des gaz d'échappement selon la revendication 14, **caractérisé en ce que** le boîtier de support (32) est formé en forme de pot avec la base du boîtier (34) et la paroi circonférentielle (36), et ledit au moins un conducteur chauffant (18, 20) sur un deuxième côté axial (22) n'est sensiblement pas recouvert par le dispositif de support (30) ou/et ledit au moins un conducteur chauffant (18, 20) sur le deuxième côté axial (22) dépasse axialement de la paroi circonférentielle (36).

16. Un système d'échappement pour un moteur à combustion interne, comprenant au moins une unité de traitement des gaz d'échappement (24), de préférence un convertisseur catalytique et/ou un filtre à particules, et au moins un réchauffeur des gaz d'échappement (14) selon l'une des revendications précédentes, en amont de l'unité de traitement des gaz d'échappement (24) dans un sens d'écoulement principal des gaz d'échappement (A).
